# FASCICULE DE BREVET EUROPEEN

(11) **EP 4 308 390 B1**
(45) Date de publication et mention de la délivrance du brevet: **03.09.2025**
(21) Numéro de dépôt: 22707483.8
(22) Date de dépôt: 08.02.2022
(51) Int. Cl.: B60G 11/30, B60G 13/18, F16F 7/10, F16F 9/096

(54) **DISPOSITIF DE SUSPENSION INERTIELLE HYDRAULIQUE, METHODE, AMORTISSEUR ET VEHICULE SUR LA BASE D'UN TEL DISPOSITIF**
HYDRAULISCHE INERTIALE RADAUFHÄNGUNGSVORRICHTUNG, VERFAHREN, STOSSDÄMPFER UND FAHRZEUG AUF DER BASIS EINER SOLCHEN VORRICHTUNG
HYDRAULIC INERTIAL SUSPENSION DEVICE, METHOD, DAMPER AND VEHICLE BASED ON SUCH A DEVICE

(30) Priorité: 16.03.2021 FR 2102628
(43) Date de publication de la demande: 24.01.2024
(73) Titulaire: Stellantis Auto SAS, 78300 Poissy (FR)
(72) Inventeur: BERNARD, Paul, 70290 CHAMPAGNEY (FR); MONTEIL, Christophe, 91640 BRIIS SOUS FORGES (FR)
(74) Mandataire: BCIP
(86) Numéro de dépôt international: PCT/FR2022/050227
(87) Numéro de publication internationale: WO 2022/195186

(56) Documents cités:
- WO-A1-2011/089373
- WO-A1-2018/091795
- FR-A1- 3 079 581

## Description

La présente invention revendique la priorité de la demande française 2102628 déposée le 16 mars 2021, dont le contenu (texte, dessins et revendications) est ici incorporé par référence.

L'invention se rapporte au domaine des dispositifs et systèmes de suspension inertielle hydraulique. L'invention trouve une application particulièrement avantageuse, mais non exclusive, dans le domaine des véhicules automobiles.

Il s'agit plus particulièrement de systèmes de suspension verticale des véhicules permettant une amélioration du confort de suspension.

Dans ce domaine, des dispositifs de suspension inertielle hydraulique utilisent un fluide pour créer une inertie à la place d'un amortisseur conventionnel. WO 2018/091795 A1 divulgue un dispositif de suspension qui équipe un train de véhicule comportant des roues propres à rouler. Ce dispositif comprend : - un ressort et un amortisseur montés en parallèle, - un circuit inertiel comprenant au moins un premier tuyau présentant des longueur et section prédéfinies, et propre à produire de façon contrôlée une inertie fluidique, - un vérin monté en parallèle des ressort et amortisseur et comprenant une chambre couplée au premier tuyau, et - des moyens de contrôle propres à contrôler l'inertie fluidique produite par le circuit inertiel en fonction d'au moins une information représentative d'une valeur en cours d'au moins un paramètre choisi du véhicule. Ledit premier tuyau comprend des première et seconde extrémités couplées respectivement à des entrées/sorties de ladite chambre et d'un réservoir de fluide, et lesdits moyens de contrôle comprennent des premiers moyens d'action installés entre lesdites entrées/sorties de la chambre et dudit réservoir de fluide afin de contrôler la connexion/ déconnexion dudit premier tuyau.

Malheureusement, sur certains obstacles à front raide, il peut y avoir une cavitation dans le circuit. Pour limiter ce risque, il est possible d'augmenter la pression statique du circuit mais cela génère plus de frottements en particulier dans le vérin. Or, ces frottements diminuent l'efficacité du système en particulier pour la prestation en confort vibratoire du véhicule. Cet inconvénient est observé en détente dans certaines architectures.

Ainsi, un objectif de l'invention est de proposer une nouvelle architecture de dispositif de suspension hydraulique permettant de limiter à la fois le risque de cavitation dans le circuit, et aussi les frottements dans le vérin, en particulier spécifiquement en détente.

Pour atteindre cet objectif l'invention propose un dispositif de suspension inertielle hydraulique pour véhicule, le dispositif comprenant
- un vérin comportant un corps et un piston délimitant une chambre de détente et une chambre de compression,
- une chambre de compensation en regard de la chambre de détente,
- un circuit de fluide comprenant une branche de détente mettant en communication fluidique la chambre de détente avec la chambre de compensation, et une branche de compression mettant en communication fluidique la chambre de compression avec la chambre de compensation via une dérivation de la branche de détente en amont de chambre de compensation,
la branche de compression comprenant un premier augmentateur inertiel en amont de la chambre de compensation

Selon un premier aspect, la branche de compression comprend en outre au moins un deuxième augmentateur inertiel en amont du premier augmentateur inertiel, le circuit de fluide comprenant en outre un court-circuit hydraulique du deuxième augmentateur inertiel, activé en attaque.

Avantageusement, l'invention permet de limiter l'augmentation de la pression en intégrant un court-circuit activé en attaque, permettant de réduire l'inertie dans le mouvement de détente en l'occurrence.

Selon d'autres aspects pris isolément, ou combinés selon toutes les combinaisons techniquement réalisables :
- le court-circuit hydraulique est activé à des fréquences supérieures ou égales à 20 Hz ; et/ou
- le court-circuit hydraulique est activé au moyen d'un clapet anti-retour orienté pour court-circuiter le deuxième augmentateur inertiel en attaque ; et/ou
- la chambre de compensation est une sphère de compensation ; et/ou
- le fluide du circuit de fluide comprend de l'huile de suspension ; et/ou
- le fluide du circuit de fluide comprend du glycol.

L'invention porte en outre sur une méthode de mise en œuvre de suspension inertielle hydraulique pour un dispositif de suspension inertielle hydraulique comprenant
- un vérin comportant un corps et un piston délimitant une chambre de détente et une chambre de compression ;
- une chambre de compensation en regard de la chambre de détente,
- un circuit de fluide comprenant une branche de détente mettant en communication fluidique la chambre de détente avec la chambre de compensation, et une branche de compression mettant en communication fluidique la chambre de compression avec la chambre de compensation via une dérivation de la branche de détente en amont de chambre de compensation,

la branche de compression comprenant un premier augmentateur inertiel en amont de la chambre de compensation,
la branche de compression comprenant en outre au moins un deuxième augmentateur inertiel en amont du premier augmentateur inertiel ,
la méthode comprenant
   - une étape de détente dans laquelle la chambre de compression se remplit et la chambre de détente se vide,
   - une étape d'attaque dans laquelle la chambre de compression se vide et la chambre de détente se remplit,
et étant caractérisé par
   - si les fréquences de vibrations du dispositif sont supérieures ou égales à un seuil en attaque, de préférence d'environ 20Hz, une sous-étape de déviation de flux de sorte à court-circuiter le deuxième augmentateur inertiel .

L'invention concerne en outre un amortisseur pour véhicule, comprenant un dispositif de suspension inertielle selon l'invention.

Un autre objet de l'invention concerne un véhicule comprenant un dispositif de suspension inertielle selon l'invention.

L'invention sera davantage détaillée par la description de modes de réalisation non limitatifs, et sur la base des figures annexées illustrant des variantes de l'invention, dans lesquelles :

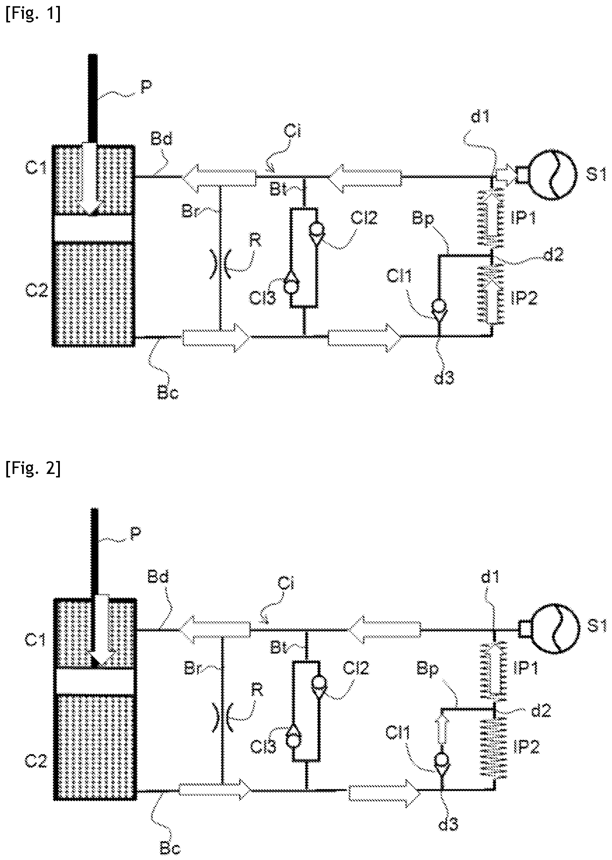

- [Fig.1] illustre schématiquement un dispositif de suspension inertielle selon une variante préférée de l'invention en attaque avec des vibrations de fréquence inférieure à 20Hz ;
- [Fig.2] illustre le dispositif de suspension inertielle de la figure précédente en attaque avec des vibrations de fréquence supérieure ou égale à 20Hz ; et

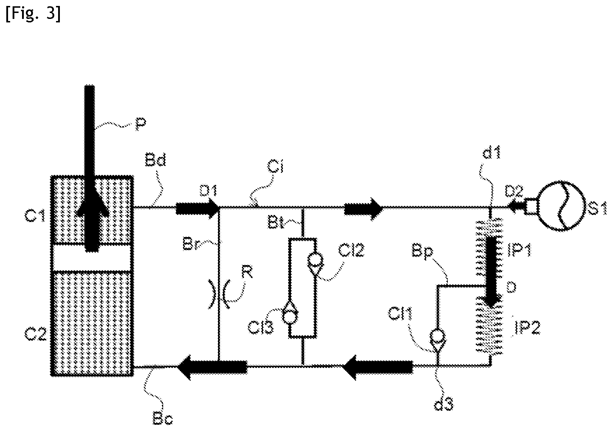

- [Fig.3] illustre le dispositif de suspension inertielle des figures précédentes en détente.

L'invention concerne un dispositif de suspension inertielle hydraulique. L'invention trouve une application particulièrement avantageuse, mais non exclusive, dans le domaine des véhicules automobiles.

Le dispositif de suspension inertielle comprend un vérin comportant un corps et un piston P. Le corps et le piston P délimitent une chambre de détente C1 et une chambre de compression C2. Dans la variante illustrée, la chambre de détente C1 est disposée au-dessus de la chambre de compression C2. La tige de piston s'étend dans la chambre de détente C1.

Le dispositif de suspension inertielle comprend en outre une chambre de compensation S1 en regard de la chambre de détente C1. En particulier, la chambre de compensation S1 comprend une sphère de compensation.

Le dispositif de suspension inertielle comprend en outre un circuit de fluide Ci comprenant un fluide amortisseur se déplaçant entre les chambres. Le fluide amortisseur peut comprendre de l'huile de suspension, telle que celle du type « LDS » (Liquide de Direction et Suspension). Le fluide amortisseur peut aussi comprendre du glycol plus dense et donc aussi plus efficace, avec l'avantage supplémentaire de réduire les pertes de charge par sa caractéristique de viscosité réduite.

Le circuit de fluide Ci comprend une branche de détente Bd et une branche de compression Bc. La branche de détente Bd met en communication fluidique la chambre de détente C1 avec la chambre de compensation S1. En outre, la branche de compression Bc met en communication fluidique la chambre de compression C2 avec la chambre de compensation S1. A cet effet, une première dérivation d1 est prévue sur la branche de détente Bd, de préférence juste avant la connexion de la branche de détente Bd à la chambre de compensation S1. On pourra parler de connexion en amont de la chambre de compensation S1.

Ainsi, la branche de compression Bc est connectée à la branche de détente Bd de sorte que du fluide sortant de S1 peut aller dans la branche de détente Bd ou dans la branche de compression Bc, et inversement.

Par ailleurs, la branche de compression Bc comprend un premier augmentateur inertiel IP1 en amont de la chambre de compensation S1.

Selon un aspect, la branche de compression Bc comprend en outre au moins un deuxième augmentateur inertiel IP2 en amont du premier augmentateur inertiel IP1.

Les augmentateurs inertiels IP1, IP2 prennent par exemple la forme d'une colonne de fluide. De préférence, les inerties des augmentateurs inertiels IP1, IP2 sont identiques.

De plus, le circuit de fluide Ci comprenant en outre un court-circuit hydraulique Bp du deuxième augmentateur inertiel IP2. Dans le cadre de l'invention, le court-circuit Bp est activé en attaque.

Avantageusement, l'invention permet de mettre en œuvre une inertie différente en attaque et en détente, alors que les architectures connues de suspensions inertielles hydrauliques ont des inerties symétriques.

En outre, l'invention permet de limiter l'augmentation de la pression en intégrant un court-circuit Bp activé en attaque. Il en résulte une réduction de l'inertie dans le sens choisi, dans le mouvement de détente en l'occurrence.

L'invention est particulièrement avantageuse car la cavitation aurait aussi pu être limitée en augmentant la pression de service mais cela augmenterait les frottements entre le piston P et le cylindre. L'invention permet de limiter l'augmentation de la pression en intégrant le court-circuit Bp susvisé.

Ainsi, une deuxième dérivation d2 est prévue entre les deux augmentateurs inertiels IP1, IP2, et une troisième dérivation d3 est prévue en amont du deuxième augmentateur inertiel IP2.

En particulier, le court-circuit hydraulique Bp est activé à des fréquences supérieures ou égales à un seuil de préférence d'environ 20 Hz. On pourra parler de vibrations à haute fréquence au-delà du seuil, et à basse fréquence en dessous du seuil.

Pour ce faire, le court-circuit Bp comporte un clapet anti-retour Cl1 orienté pour court-circuiter le deuxième augmentateur inertiel IP2 en attaque. En particulier, le clapet anti-retour Cl1 est configuré pour laisser passer des débits correspondants à des fréquences supérieures ou égales audit seuil en attaque. En dessous de ces fréquences, le fluide est bloqué et passe en particulier par le deuxième augmentateur inertiel IP2.

En détente, le clapet anti-retour Cl1 est configuré pour bloquer le passage de fluide quelle que soit la fréquence.

De préférence, le circuit de fluide Ci comprend en outre une première branche parallèle Br connectant la branche de détente Bd à la branche de compression Bc. La première branche parallèle Br est montée en parallèle des augmentateurs inertiels IP1, IP2. La première branche parallèle Br comprend un réducteur de débit R pouvant être réglable.

Le réducteur de débit R permet de mettre en court-circuit la chambre de compression C2 et la chambre de détente C1 en cas de vibrations à haute fréquence (calibré pour une fréquence seuil). Le réducteur de débit R est de préférence calibré en fonction du véhicule d'utilisation du dispositif. Il s'agit par exemple d'un étrangleur comme illustré dans les figures.

En outre, de préférence, le circuit de fluide Ci comprend une deuxième branche parallèle Bt connectant la branche de détente Bd à la branche de compression Bc. La deuxième branche parallèle Bt est montée en parallèle de la première branche parallèle Br, en particulier entre celle-ci et les augmentateurs inertiels IP1, IP2. La deuxième branche parallèle Bt comprend une double dérivation avec de chaque côté un clapet anti-retour Cl2, Cl3 en sens opposé (tête-bêche).

Les deux clapets anti-retour Cl2, Cl3 permettent de mettre en court-circuit la chambre de compression C2 et la chambre de détente C1 dans le cas de vibrations à haute fréquence afin d'éviter que ces dernières remontent vers la caisse du véhicule.

L'invention concerne en outre une méthode de mise en œuvre de suspension inertielle hydraulique pour un dispositif de suspension inertielle hydraulique ayant une structure telle que décrite précédemment.

Le procédé comprend une étape de détente dans laquelle la chambre de compression C2 du vérin est en décompression et se remplit, et la chambre de détente C1 est en compression et se vide.

Le procédé comprend en outre une étape d'attaque dans laquelle la chambre de compression C2 du vérin est en compression et se vide, et la chambre de détente C1 est en décompression et se remplit.

Lors de l'étape d'attaque, si les fréquences des vibrations du dispositif sont supérieures ou égales à un seuil, de préférence d'environ 20Hz, alors le procédé comprend une sous-étape de déviation de flux de fluide de sorte à court-circuiter le deuxième augmentateur inertiel IP2. En particulier, la dérivation de flux se fait au moyen d'un clapet anti-retour Cl1 orienté pour court-circuiter le deuxième augmentateur inertiel IP2 en attaque.

Plus particulièrement, en basse fréquence (entre 0 et 20Hz), le système libère toute l'inertie possible. Le fluide passe dans les conduites inertielles principales IP1 et IP2, ce qui permet à la suspension inertielle d'amortir correctement le véhicule.

Par contre, si les fréquences des vibrations du dispositif sont inférieures à un seuil ou de préférence audit seuil en attaque, alors le procédé ne comprend pas ladite sous-étape de dérivation de flux. En particulier, le fluide passe dans le deuxième inertiel IP2, étant bloqué par le clapet anti-retour Cl1 dessous du seuil.

Plus particulièrement, en haute fréquence (à partir de 20Hz), l'inertie fournie par la suspension doit être réduite afin de limiter le rebond de roue. La seconde inertie principale IP2 est donc court-circuitée par la branche Bp équipée du clapet Cl1 formant soupape de décompression.

De plus, pour toutes les plages de fréquence, la sphère d'accumulation S1 permet d'éviter les phénomènes de cavitation apparaissant principalement dans la chambre C1 du vérin.

En outre, quelle que soit la fréquence en détente, le procédé ne comprend pas ladite sous-étape de dérivation de flux, en particulier en raison d'un blocage de flux au moyen dudit clapet anti-retour Cl1.

Plus particulièrement, pendant la phase de détente, le volume de la chambre alimentée C2 est supérieur au volume de la chambre vidée C1 du fait de la présence de la tige du vérin dans la chambre supérieure C1, impliquant un fort risque de cavitation. Ce risque de cavitation est compensé par la sphère d'accumulation S1 qui permet de fournir le volume nécessaire à l'alimentation de chacune des chambres C1, C2 en toute circonstance. La sphère d'accumulation S1 assure également le lissage du courant tout au long du fonctionnement. Ainsi, la quantité de fluide circulant dans le circuit Ci est constante tout au long du mouvement.

L'invention permet de repousser l'apparition de la cavitation dans la chambre de compensation S1 lors des mouvements de détente, permettant de limiter la pression statique dans le système et ainsi de réduire le frottement dans le système.

L'invention porte également sur un amortisseur pour véhicule, comprenant un dispositif de suspension inertielle tel que décrit précédemment.

Un autre objet de l'invention concerne un véhicule comprenant un dispositif de suspension inertielle tel que décrit précédemment. Il s'agit en particulier d'un véhicule automobile.

## Revendications

1. Dispositif de suspension inertielle hydraulique pour véhicule, le dispositif comprenant
- un vérin comportant un corps et un piston (P) délimitant une chambre de détente (C1) et une chambre de compression (C2),
- une chambre de compensation (S1) en regard de la chambre de détente (C1),
- un circuit de fluide (Ci) comprenant une branche de détente (Bd) mettant en communication fluidique la chambre de détente (C1) avec la chambre de compensation (S1), et une branche de compression (Bc) mettant en communication fluidique la chambre de compression (C2) avec la chambre de compensation (S1) via une dérivation (d1) de la branche de détente (Bd) en amont de chambre de compensation (S1),
la branche de compression (Bc) comprenant un premier augmentateur inertiel (IP1) en amont de la chambre de compensation (S1),
**caractérisé en ce que** la branche de compression (Bc) comprend en outre au moins un deuxième augmentateur inertiel (IP2) en amont du premier augmentateur inertiel (IP1),
le circuit de fluide (Ci) comprenant en outre un court-circuit hydraulique (Bp) du deuxième augmentateur inertiel (IP2), activé en attaque.

2. Dispositif de suspension inertielle selon la revendication 1, **caractérisé en ce que** le court-circuit hydraulique (Bp) est activé à des fréquences supérieures ou égales à 20 Hz.

3. Dispositif de suspension inertielle selon l'une quelconque des revendications 1 à 2, **caractérisé en ce que** le court-circuit hydraulique (Bp) est activé au moyen d'un clapet anti-retour (Cl1) orienté pour court-circuiter le deuxième augmentateur inertiel (IP2) en attaque.

4. Dispositif de suspension inertielle selon l'une quelconque des revendications 1 à 3, **caractérisé en ce que** la chambre de compensation (S1) est une sphère de compensation.

5. Dispositif de suspension inertielle selon l'une quelconque des revendications 1 à 4, **caractérisé en ce que** le fluide du circuit de fluide (Ci) comprend de l'huile de suspension.

6. Dispositif de suspension inertielle selon l'une quelconque des revendications 1 à 5, **caractérisé en ce que** le fluide du circuit de fluide (Ci) comprend du glycol.

7. Méthode de mise en œuvre de suspension inertielle hydraulique pour un dispositif de suspension inertielle hydraulique comprenant
- un vérin comportant un corps et un piston (P) délimitant une chambre de détente (C1) et une chambre de compression (C2) ;
- une chambre de compensation (S1) en regard de la chambre de détente (C1),
- un circuit de fluide (Ci) comprenant une branche de détente (Bd) mettant en communication fluidique la chambre de détente (C1) avec la chambre de compensation (S1), et une branche de compression (Bc) mettant en communication fluidique la chambre de compression (C2) avec la chambre de compensation (S1) via une dérivation (d1) de la branche de détente (Bd) en amont de chambre de compensation (S1),
la branche de compression (Bc) comprenant un premier augmentateur inertiel (IP1) en amont de la chambre de compensation (S1),
la branche de compression (Bc) comprenant en outre au moins un deuxième augmentateur inertiel (IP2) en amont du premier augmentateur inertiel (IP1), la méthode comprenant
- une étape de détente dans laquelle la chambre de compression (C2) se remplit et la chambre de détente (C1) se vide,
- une étape d'attaque dans laquelle la chambre de compression (C2) se vide et la chambre de détente (C1) se remplit,
et étant **caractérisé par**
- si les fréquences de vibrations du dispositif sont supérieures ou égales à un seuil en attaque, de préférence d'environ 20Hz, une sous-étape de déviation de flux de sorte à court-circuiter le deuxième augmentateur inertiel (IP2).

8. Amortisseur pour véhicule, comprenant un dispositif de suspension inertielle selon l'une quelconque des revendications 1 à 6.

9. Véhicule comprenant un dispositif de suspension inertielle selon l'une quelconque des revendications 1 à 6.

## Patentansprüche

1. die eine hydraulische Trägheitsaufhängung für ein Fahrzeug aufweist, wobei die Vorrichtung Folgendes aufweist:
- einem Zylinder mit einem Zylinderkörper und einem Kolben (P), der eine Expansionskammer (Cl) und eine Kompressionskammer (C2) begrenzt,
- eine Ausgleichskammer (S1) gegenüber der Ausgleichskammer (Cl),
- ein Fluidkreislauf (Ci) mit einem Expansionsschenkel (Bd), der die Expansionskammer (Cl) mit der Kompensationskammer (S1) in Fluidverbindung bringt, und einem Kompressionsschenkel (Bc), der die Kompressionskammer (C2) mit der Kompensationskammer (S1) über einen Bypass (dl) des Expansionsschenkels (Bd) vor der Kompensationskammer (S1) in Fluidverbindung bringt, wobei der Kompressionsschenkel (Bc) einen ersten Trägheitsverstärker (IP 1) vor der Kompensationskammer (S1) umfasst,
**dadurch gekennzeichnet, dass** der Kompressionszweig (Bc) ferner wenigstens einen zweiten Trägheitsverstärker (IP2) stromaufwärts des ersten Trägheitsverstärkers (IP1) aufweist, wobei der Fluidkreislauf (Ci) ferner einen hydraulischen Kurzschluss (Bp) des zweiten Trägheitsverstärkers (IP2) aufweist, der angesteuert wird.

2. **dadurch gekennzeichnet, dass** der hydraulische Kurzschluss (Bp) bei Frequenzen größer oder gleich 20 Hz aktiviert wird.

3. Vorrichtung nach einem der Ansprüche 1 bis 2, **dadurch gekennzeichnet, dass** der hydraulische Kurzschluss (Bp) mittels eines Rückschlagventils (C11) aktiviert wird, das so ausgerichtet ist, dass es den angreifenden zweiten Trägheitsverstärker (IP2) kurzschließt.

4. Trägheitsaufhängung nach einem der Ansprüche 1 bis 3, **dadurch gekennzeichnet, dass** die Ausgleichskammer (S1) eine Ausgleichskugel ist.

5. Vorrichtung nach einem der Ansprüche 1 bis 4, **dadurch gekennzeichnet, dass** das Fluid des Fluidkreislaufs (Ci) Suspensionsöl umfasst.

6. **dadurch gekennzeichnet, dass** das Fluid des Fluidkreislaufs (Ci) Glykol umfasst.

7. zur Durchführung einer hydraulischen Trägheitsaufhängung für eine hydraulische Trägheitsaufhängungsvorrichtung mit
- einen Zylinder mit einem Zylinderkörper und einem Kolben (P), der eine Expansionskammer (Cl) und eine Kompressionskammer (C2) begrenzt;
- eine Ausgleichskammer (S1) gegenüber der Ausgleichskammer (Cl),
- ein Fluidkreislauf (Ci) mit einem Expansionsschenkel (Bd), der die Expansionskammer (Cl) mit der Kompensationskammer (Si) in Fluidverbindung bringt, und einem Kompressionsschenkel (Bc), der die Kompressionskammer (C2) mit der Kompensationskammer (Si) über einen Bypass (dl) des Expansionsschenkels (Bd) stromaufwärts der Kompensationskammer (Si) in Fluidverbindung bringt, wobei der Kompressionsschenkel (Bc) einen ersten Trägheitsverstärker (IP 1) stromaufwärts der Kompensationskammer (Si) umfasst, wobei der Kompressionsschenkel (Bc) ferner wenigstens einen zweiten Vergrößerer umfasst Trägheit (IP2) vor dem ersten Trägheitssteigerer (IP1),
Verfahren, das Folgendes umfasst:
- ein Entspannungsschritt, bei dem sich die Kompressionskammer (C2) füllt und die Entspannungskammer (Cl) entleert,
- Ein Ätzschritt, in dem die Kompressionskammer (C2) sich bewegt leer ist und die Expansionskammer (Cl) gefüllt ist,
und **gekennzeichnet durch**
- Wenn die Schwingungsfrequenzen der Vorrichtung größer oder gleich einem angreifenden Schwellwert, vorzugsweise von etwa 20Hz, sind, wird ein Teilschritt der Flussablenkung so ausgeführt, dass der zweite Trägheitsverstärker (IP2) kurzgeschlossen wird.

8. Stoßdämpfer für ein Fahrzeug nach Anspruch 8, der eine Trägheitsaufhängungsvorrichtung nach einem der Ansprüche 1 bis 6 umfasst.

9. das eine Trägheitsaufhängungsvorrichtung nach einem der Ansprüche 1 bis 6 umfasst.

## Claims

1. Hydraulic inertial suspension device for a vehicle, the device comprising:
cylinder comprising a body and a piston (P) delimiting an expansion chamber (Cl) and a compression chamber (C2), compensation chamber (S 1) facing the expansion chamber (Cl), fluid circuit (Ci) comprising an expansion branch (Bd) placing the expansion chamber (Cl) in fluid communication with the compensation chamber (S 1), and a compression branch (Bc) placing the compression chamber (C 2) in fluid communication with the compensation chamber (S 1) via a branch (dl) of the expansion branch (Bd) upstream the compensation chamber (S 1), the compression branch (Bc) comprising a first inertial augmentor (IP 1) upstream the compensation chamber (S 1), wherein the compression branch (Bc) further comprises at least one second inertial augmentor (IP 2) upstream to the first inertial augmentor (IP 1), the fluid circuit (Ci) further comprising a hydraulic short-circuit (Bp) of the second inertial augmentor (IP 2), activated in attack.

2. Inertial suspension device according to Claim 1,
**characterised in that** the hydraulic short-circuit (Bp) is activated to frequencies greater than or equal to 20 Hz.

3. Inertial suspension device according to any one of Claims 1 to 2, **characterised in that** the hydraulic short-circuit (Bp) is activated by means of an anti-return valve (C11) orientated so as to short-circuit the second inertial augmentor (IP2) under attack.

4. Inertial suspension device according to any one of Claims 1 to 3, **characterised in that** the compensation chamber (S1) is a compensation sphere.

5. Inertial suspension device according to any one of Claims 1 to 4, **characterised in that** the fluid of the fluid circuit (Ci) comprises suspension oil.

6. Inertial suspension device according to any one of Claims 1 to 5, **characterised in that** the fluid of the fluid circuit (Ci) comprises glycol.

7. Method of using hydraulic inertial suspension for a hydraulic inertial suspension device comprising
- a cylinder comprising a body and a piston (P) delimiting an expansion chamber (Cl) and a compression chamber (C2); compensation chamber (S 1) facing the expansion chamber (Cl), fluid circuit (Ci) comprising an expansion branch (Bd) fluidly connecting the expansion chamber (Cl) with the compensation chamber (Si), and a compression branch (Bc) fluidly connecting the compression chamber (C2) with the compensation chamber (Si) via a branch (dl) of the expansion branch (Bd) upstream the compensation chamber (Si), the compression branch (Bc) comprising a first inertial augmentor (IP 1) upstream the compensation chamber (Si), the compression branch (Bc) further comprising at least one second augmentor inertial (IP 2) upstream to the first inertial augmentation device (IP 1),
the method comprising
expansion step in which the compression chamber (C 2) is filled and the expansion chamber (C 1) is emptied,
attack step in which the compression chamber (C 2) is vacuum and the expansion chamber (Cl) fills,
and being **characterised by**
if the vibration frequencies of the device are greater than or equal to a threshold under attack, preferably of about 20 Hz, a sub-step of flow deviation so as to bypass the second inertial augmentation device (IP 2).

8. A shock absorber for a vehicle, comprising an inertial suspension device according to any one of claims 1 to 6.

9. Vehicle comprising an inertial suspension device according to any one of Claims 1 to 6.
